# EUROPÄISCHE PATENTANMELDUNG

(11) **EP 4 471 112 A2**
(43) Veröffentlichungstag der Anmeldung: **04.12.2024**
(21) Anmeldenummer: 24207880.6
(22) Anmeldetag: 14.05.2021
(51) Int. Cl.: C10L 5/40

(54) **VERFAHREN ZUR HERSTELLUNG VON BRIKETTS AUS EINEM ABFALLMATERIAL UND BRIKETT AUS EINEM ABFALLMATERIAL**

(30) Priorität: 14.05.2020 DE 102020206095
(62) Teilanmeldung aus: 21726628.7
(71) Anmelder: Bernegger GmbH, 4591 Molln (AT); Hatch Küttner GmbH, 45130 Essen (DE)
(72) Erfinder: BERNEGGER, Kurt, 4592 Leonstein (AT); HANUSCH, Bernhard, 49170 Hagen am Teutoburger Wald (DE); BEHRMANN, Dirk, 45130 Essen (DE); SALEHI, Farzad, 45239 Essen (DE); BREUER, Thomas, 41564 Kaarst (DE)
(74) Vertreter: Burger, Hannes Alfred

(57) **Zusammenfassung**

Die Erfindung betrifft ein Verfahren zur Herstellung von Briketts (1), ein Brikett (1) aus einem Abfallmaterial (2) und die Verwendung eines Briketts (1) in dem erfindungsgemäßen Verfahren. Das Verfahren sieht ein Bereitstellen eines Abfallmaterials (2) vor, welches zumindest ein Metall (3) und zumindest ein organisches Material (4) umfasst. Es erfolgt ein ein- oder mehrstufiges mechanisches Aufbereiten des Abfallmaterials (2) und ein Trennen zumindest einer ersten Fraktion (5) von dem Abfallmaterial (2). Es wird eine Brikettmischung (6) enthaltend die zumindest eine erste Fraktion (5) hergestellt, wobei die zumindest eine erste Fraktion (5) einen Heizwert von 0 MJ/kg bis 30 MJ/kg aufweist. Ein Heizwert der Brikettmischung (6) wird durch Variation zumindest der ersten Fraktion (5) eingestellt. Die Brikettmischung (6) wird in eine Brikettiervorrichtung (7) eingebracht und dort zu Briketts (1) verpresst. Dabei werden Briketts (1) mit einem Heizwert von 5 MJ/kg bis 30 MJ/kg und mit einem maximalen Kupferanteil von 0,1 Gew.% bis 20 Gew.% hergestellt.

## Beschreibung

Die Erfindung betrifft ein Verfahren zur Herstellung von Briketts aus einem Abfallmaterial, sowie ein Brikett aus einem Abfallmaterial und die Verwendung eines solchen Briketts in einem Reaktor.

Verschiedenartige Abfallmaterialien können mechanisch beispielsweise in Shredderanlagen aufbereitet und in verwertbare bzw. recycelbare Fraktionen aufgetrennt werden. Die dabei entstehenden Fraktionen, die Shredderleichtfraktion (shredder light fraction SLF) und die Shredderschwerfraktion (shredder heavy fraction SHF), können in Wertstoffströme aufgetrennt werden, welche in weiterer Folge im Zuge von Aufbereitungsverfahren aufbereitet und somit in einen Wertstoffzyklus rückgeführt werden.

Aus der SLF, sowie der SHF bleiben jedoch stets Rückstände mit vergleichsweise geringem Wertstoffgehalt, insbesondere mit geringem Metallgehalt zurück. Der Fachwelt sind Aufbereitungsverfahren zur Aufbereitung dieser Shredderrückstände bekannt. Allerdings sind diese Verfahren aus wirtschaftlicher Sicht nur wenig zufriedenstellend. Dies insbesondere auch deshalb, weil die Zusammensetzung der Shredderrückstände starken Schwankungen im Hinblick auf Qualität und Zusammensetzung unterworfen sind. Aus diesem Grund werden Shredderrückstände zumeist entweder einer Verbrennung in einer thermischen Verwertungsanlage (TVA) zugeführt oder deponiert.

Bisher werden gerade Schredder-Leichtfraktionen als ein Beispiel von schwermetallhaltigen Rückständen aus Schredderanlagen oder anderes Abfallmaterial mit einem großen Anteil organischer und mineralischer Inhaltsstoffe und einem kleinen Anteil metallischer Inhaltsstoffe im Deponiebau, als Bergversatz oder in Müllverbrennungsanlagen entsorgt. Auf diese Weise ist es jedoch nicht möglich, zum Teil wertvolle Inhaltsstoffe dieses Abfalls zurückzugewinnen und wiederzuverwerten.

Diese Lösungen sind jedoch nicht im Sinne einer nachhaltigen Wirtschaftsweise und damit nur bedingt zufriedenstellend, zumal Metalle, welche ansonsten aufwändig primär gewonnen werden müssen, durch Verbrennung und Deponierung für eine Rückführung in einen Wertstoffkreislauf für immer verloren gehen.

Um in solchem Abfallmaterial enthaltene Rohstoffe teilweise oder möglichst vollständig wiederverwerten zu können, ist es erforderlich, diese Rohstoffe möglichst rein aus dem Abfallmaterial selektiv abzuscheiden, was besonders für Schwermetalle, insbesondere Edelmetalle gilt, um die Rohstoffe in die Stoffkreisläufe zurückzuführen. Hierfür sind die bisher angewendeten Entsorgungsverfahren, insbesondere Müllverbrennungsanlagen ungeeignet. Das Ergebnis der Müllverbrennung ermöglicht aufgrund seiner Struktur keine Auftrennung seiner Inhalts stoffe.

Zwar sind Verfahren zur Gewinnung von Metallen aus primären und auch sekundären Rohstoffquellen in Metallhütten grundsätzlich bekannt, jedoch ist es mit den bekannten Verfahren nicht möglich, Abfallfraktionen mit großen Inputströmen und vergleichsweise geringen Metallanteilen auf ökologisch und wirtschaftlich zufriedenstellende Art und Weise aufzubereiten. Dies ist insbesondere dann der Fall, wenn es sich bei den geringen Mengen an enthaltenem Metall bzw. Metallen um feines Material handelt. Besonders feinkörnige, stark verwachsene, gering metallhaltige Rückstände z.B. aus der Aufbereitung von Shredderrückständen aus der Aufbereitung von Elektro- und Elektronikaltgeräten (sogenannte Tertiärabfälle, also Abfälle welche den Rückstand bzw. Rest bilden, welcher nach einer mehrstufigen Aufbereitung zurückbleibt) sind derzeit nicht zufriedenstellend rückgewinnbar.

Aufgabe der vorliegenden Erfindung war es, die Nachteile des Standes der Technik zu überwinden ein Verfahren zur Herstellung von Briketts und ein Brikett mit Eigenschaften zur Verfügung zu stellen, welche eine ökologische Aufbereitung und zudem wirtschaftliche Wertstoffrückgewinnung ermöglichen.

Diese Aufgabe wird durch ein Verfahren, ein Brikett und die Verwendung eines Briketts gemäß den Ansprüchen gelöst.

Die Erfindung betrifft ein Verfahren zur Herstellung von Briketts aus einem Abfallmaterial. Verfahrensgemäß wird ein Abfallmaterial bereitgestellt, welches Abfallmaterial zumindest ein Metall und zumindest ein organisches Material umfasst. Bei dem Abfallmaterial kann es sich dabei um Rückstände aus einer mechanischen Aufbereitung, in welchen zumindest ein Metall enthalten ist, beispielsweise um Rückstände aus der Aufbereitung von Elektro- und Elektronikschrott oder von Shredderrückständen, handeln. Bei dem organischen Material kann es sich beispielsweise um jegliche Arten von Kunststoffen, jegliches nicht kompostierbares organisches Material, aber auch um jegliche Arten von zellstoffhaltigen Materialien wie Holz oder auch Naturfasern handeln. Bei dem organischen Material kann es sich beispielsweise auch um Epoxidharz handeln, welches Bestandteil von Elektronikschrott sein kann.

Des Weiteren erfolgt ein ein- oder mehrstufiges mechanisches Aufbereiten des Abfallmaterials und ein Trennen zumindest einer ersten Fraktion von dem Abfallmaterial. Bei der ersten Fraktion kann es sich dabei um eine Fraktion aus Shredderrückständen mit vergleichsweise geringem Wertstoffgehalt handeln. Aufgrund der feinkörnigen, verwachsenen Beschaffenheit des Wertstoffs bzw. des zumindest einen Metalls unterscheidet sich die erste Fraktion von der Beschaffenheit der in einer Shredderleichtfraktion oder einer Shredderschwerfraktion enthaltenen Metalle.

In einem weiteren Verfahrensschritt wird eine Brikettmischung enthaltend die zumindest eine erste Fraktion hergestellt. Die zumindest eine erste Fraktion weist dabei einen Heizwert von 0 MJ/kg bis 30 MJ/kg auf.

Durch Variation der Menge der zumindest einen ersten Fraktion wird ein Heizwert der Brikettmischung eingestellt. Dabei kann der gewünschte bzw. erforderliche Heizwert kontinuierlich angepasst bzw. variiert werden, sodass aus der Brikettmischung stets Briketts mit einem für einen nachfolgenden Verarbeitungsprozess, bzw. Verbrennungsprozess geeigneten oder sogar idealen Heizwert hergestellt werden können. Dabei kann es zweckmäßig sein, wenn der Heizwert der Brikettmischung kontinuierlich oder diskontinuierlich in geeigneten Intervallen gemessen bzw. überprüft wird. Dies kann beispielsweise mittels eines Steuerungs- Regelungs- und Messsystems erfolgen.

Die Brikettmischung wird in eine Brikettiervorrichtung eingebracht und die Brikettmischung wird zu Briketts verpresst, sodass Briketts mit einem Heizwert von 5 MJ/kg bis 30 MJ/kg und mit einem maximalen Kupferanteil von 0,1 Gew.% bis 20 Gew.% hergestellt werden. Bei der Brikettiervorrichtung kann es sich grundsätzlich um eine dem Stand der Technik entsprechende Maschine bzw. Anlage handeln, wobei Briketts mit verschiedenen Geometrien, beispielsweise runde Briketts, Briketts mit Loch, zylinderförmige Briketts usw., hergestellt werden können. Da der Fachwelt hinlänglich bekannt ist, dass mit dem Begriff Brikett aus feinkörnigem Material gepresste Formstücke gemeint sind, wird an dieser Stelle nicht näher auf eine Definition eingegangen. Auch hier kann es zweckmäßig sein, wenn die Qualität, also insbesondere der Heizwert und der Kupfergehalt kontinuierlich oder diskontinuierlich in geeigneten Intervallen gemessen bzw. überprüft werden. Eine solche laufende Qualitätskontrolle kann beispielsweise mit Hilfe eines Steuerungs- Regelungs- und Messsystems erfolgen.

An dieser Stelle sei noch erwähnt, dass die einzelnen Verfahrensschritte und deren zeitliche Abfolge nicht zwingend in der angeführten Reihenfolge erfolgen müssen, sondern auch eine davon abweichende zeitliche Abfolge möglich ist. Bevorzugt erfolgt jedoch eine sukzessive und somit aufeinander folgende zeitliche Abfolge der angeführten Verfahrensschritte.

Das erfindungsgemäße Verfahren hat den Vorteil, dass Briketts mit einem definierten Heizwert und mit einer definierten chemischen Zusammensetzung, und mit einem definierten Wertstoffgehalt, nämlich einem definierten Kupferanteil, hergestellt werden, sodass die Briketts den verfahrenstechnischen Anforderungen eines etwaig nachfolgenden Aufbereitungsprozesses bestmöglich entsprechen bzw. in einem solchen bestmöglich verarbeitet werden können. Indem die Zusammensetzung und Qualität der Briketts genau bekannt ist und indem der Heizwert der Brikettmischung eingestellt bzw. angepasst werden kann, können die Briketts in einem etwaigen nachfolgenden Aufbereitungs- bzw. Schmelzprozess kontrolliert, prozesssicher und damit überaus wirtschaftlich eingesetzt werden. Insbesondere, wenn die erste Fraktion vorwiegend aus feinkörnigem Material zusammengesetzt ist und nachfolgend zur Aufbereitung, zur Verbrennung bzw. zum Aufschmelzen in einem Reaktor vorgesehen ist, kann eine Verarbeitung der ersten Fraktion zu Briketts vorteilhaft sein. Dies auch deshalb, weil Briketts einfach handhabbar sind und auch auf einfache Art und Weise dosierbar sind. Insbesondere können Briketts im Vergleich zu einer unbrikettierten ersten Fraktion staubreduziert in den Reaktor eingebracht werden und verbleiben infolgedessen auch im Prozessraum.

Des Weiteren kann es zweckmäßig sein, wenn die zumindest eine erste Fraktion als eine Feinfraktion, oder umfassend eine Feinfraktion bereitgestellt wird, welche Feinfraktion überwiegend Bestandteile mit einer maximalen Korngröße von weniger als 15 mm, bevorzugt von weniger als 10 mm, aufweist. Grundsätzlich ist es denkbar, dass die zumindest eine erste Fraktion nicht ausschließlich aus einer einzigen Fraktion, nämlich aus einer einzigen Feinfraktion besteht, sondern grundsätzlich auch eine Mischung mehrerer Fraktionen sein kann. Der Begriff Feinfraktion ist in der mechanischen Aufbereitung von Abfallmaterial bekannt und bezeichnet eine im Zuge einer ein- oder mehrstufigen mechanischen Abfallaufbereitung hergestellte Fraktion aus Sand und Feinmaterial. Die Feinfraktion ist damit zumeist eine Mischung aus beispielweise Glas, feinkörnigem Eisen, Rost, dünnen Kupferkabeln, blei- und zinkhaltigen Stäuben, Kunststoffteilchen, Flusen sowie Lackresten. Die Feinfraktion ist üblicherweise vergleichsweise leicht und benötigt daher einen großer Platzbedarf bei der Lagerung und beim Transport. Üblicherweise liegt der Heizwert der Feinfraktion im Bereich von 5 MJ/kg +/- 5 MJ/kg. Zudem kann die Feinfraktion einen hohen Anteil oxidischer Materialien umfassen, welche in einem etwaigen nachfolgenden Schmelzprozess als Schlackenbildner dienen können. Die Feinfraktion kann einen Eisenanteil von bis zu 20 Gew.% aufweisen. Zudem kann die Feinfraktion einen Anteil an Nichteisenmetallen (z.B. Kupfer, Zink, Gold, etc.) von bis zu 5 Gew.% aufweisen. Gemäß der Klassifizierung der österreichischen Abfallverzeichnisverordnung bzw. gemäß Punkt 5 Tabelle 1 der ÖNORM S 2100 "Abfallverzeichnis", fällt die Feinfraktion unter die Schlüssel-Nummer SN 91103 für Rückstände aus mechanischer Aufbereitung. Diese Klassifizierung gilt sinngemäß auch für diese Art von Material außerhalb Österreichs und auch dann, wenn das Material nicht als Abfallmaterial eingeordnet ist.

Es ist kann aber auch sein, dass die zumindest eine erste Fraktion als eine Flusenfraktion bereitgestellt wird. Der Begriff Flusenfraktion oder Flusen ist in der mechanischen Aufbereitung von Abfallmaterial bekannt und bezeichnet eine im Zuge einer ein- oder mehrstufigen mechanischen Abfallaufbereitung hergestellte Mischung aus leichten, porösen und/oder faserigen Werkstoffen (Textilfasern, Schaumstoffen, Holz bzw. Zellstoff, Folien,...). Üblicherweise liegt der Heizwert der Flusenfraktion im Bereich von 22,5 MJ/kg +/- 10 MJ/kg und damit zumeist deutlich höher als der Heizwert der Feinfraktion. Es kann auch sein, dass die Flusenfraktion Blei-, Zink- und/oder Chlorverbindungen enthält. Die Flusenfraktion kann einen Eisenanteil von bis zu 6 Gew.% aufweisen. Zudem kann die Kunststofffraktion einen Anteil an Nichteisenmetallen (z.B. Kupfer, Zink, Gold, etc.) von bis zu 5 Gew.% aufweisen. Gemäß der Klassifizierung der österreichischen Abfallverzeichnisverordnung bzw. gemäß Punkt 5 Tabelle 1 der ÖNORM S 2100 "Abfallverzeichnis", fällt die Feinfraktion unter die Schlüssel-Nummer SN 91103 für Rückstände aus mechanischer Aufbereitung. Diese Klassifizierung gilt sinngemäß auch für diese Art von Material außerhalb Österreichs und auch dann, wenn das Material nicht als Abfallmaterial eingeordnet ist.

Ferner kann vorgesehen sein, dass der Brikettmischung zumindest eine zweite Fraktion beigemengt wird, welche zweite Fraktion einen von der ersten Fraktion verschiedenen Heizwert aufweist. Vorteilhafterweise können dabei die erste und die zweite Fraktion vorwiegend feinkörnige Bestandteile aufweisen.

Beispielsweise kann es sich bei der zumindest einen zweiten Fraktion um eine Kunststofffraktion, wie etwa eine Kunststofffraktion aus einer Shredderanlage, handeln. Üblicherweise umfasst eine Kunststofffraktion festes und stückiges Material bzw. abgerundete Bruchstücke aus einer verfahrenstechnischen mechanischen Aufbereitung von Abfallmaterial. Üblicherweise liegt der Heizwert der Kunststofffraktion im Bereich von 18,5 MJ/kg +/- 10 MJ/kg. Es kann auch sein, dass die Kunststofffraktion einen hohen Anteil an Chlorverbindungen enthält. Die Kunststofffraktion kann einen Eisenanteil von bis zu 5 Gew.% aufweisen. Zudem kann die Kunststofffraktion einen Anteil an Nichteisenmetallen (z.B. Kupfer, Zink, Gold, etc.) von bis zu 5 Gew.% aufweisen. Der Einsatz einer Kunststofffraktion als zweite Fraktion kann eine Einstellung des Heizwertes der Brikettmischung erleichtern und flexibilisieren.

Darüber hinaus kann vorgesehen sein, dass die zweite Fraktion eine Flusenfraktion ist, oder eine Flusenfraktion umfasst. Grundsätzlich ist es denkbar, dass die zweite Fraktion nicht ausschließlich aus einer einzigen Fraktion, nämlich aus einer einzigen Flusenfraktion besteht, sondern grundsätzlich auch eine Mischung mehrerer Fraktionen sein kann. Der Einsatz einer Flusenfraktion als zweite Fraktion zusätzlich zur Feinfraktion als erste Fraktion kann eine Einstellung des Heizwertes der Brikettmischung erleichtern und flexibilisieren.

Vorteilhaft ist auch eine Ausprägung, gemäß welcher vorgesehen sein kann, dass das Abfallmaterial zumindest ein mineralisches Material umfasst. Insbesondere wenn die Briketts, welche aus dem Abfallmaterial hergestellt werden, in einem Reaktor, insbesondere in einem Schmelzofen, oxidiert bzw. verbrannt werden, kann sich ein Anteil an mineralischem Material vorteilhaft sein. Durch das Vorhandensein von mineralischem Mineral in dem Abfallmaterial kann in einem Reaktor die Bildung einer Schlackephase mit geeigneter Viskosität begünstigt werden und somit eine Abtrennung von einer Metallphase positiv beeinflusst werden.

Gemäß einer Weiterbildung ist es möglich, dass die Briketts mit einem Heizwert von 8 MJ/kg bis 25 MJ/kg, bevorzugt von 11 MJ/kg bis 18 MJ/kg, hergestellt werden. Dieser Heizwert hat sich als besonders zweckmäßig für eine präzise und effiziente Prozessführung in einem Reaktor erwiesen, da eine autotherme Verbrennung, also eine Verbrennung ohne Zugabe zusätzlicher Brennstoffe, begünstigt wird.

Ferner kann es zweckmäßig sein, wenn die Briketts mit einem maximalen Kupferanteil von 0,3 Gew.% bis 10 Gew.%, bevorzugt von 0,5 Gew.% bis 3 Gew.%, hergestellt werden. Dieser Kupferanteil hat sich als besonders zweckmäßig für eine präzise und effiziente Prozessführung in einem Reaktor erwiesen.

Darüber hinaus kann vorgesehen sein, dass die Briketts nach dem Verpressen beheizt oder gekühlt werden. Je nach Zusammensetzung und Beschaffenheit der Briketts kann sich ein Heizen oder Kühlen positiv auf die Formstabilität und Festigkeit der Briketts auswirken.

Des Weiteren kann vorgesehen sein, dass die Briketts aus der Brikettiervorrichtung kontinuierlich oder diskontinuierliche in einen Reaktor verbracht werden. Dies kann sowohl direkt, also quasi in-line erfolgen, oder auch über einen zwischengeschalteten Lagerungs- und/oder Transportschritt erfolgen.

Gemäß einer besonderen Ausprägung ist es möglich, dass die Brikettmischung so zusammengesetzt ist, dass der Heizwert des darin enthaltenen Abfallmaterials so hoch ist, dass das darin enthaltene zumindest eine Metall in einer Verbrennung in dem Reaktor während eines laufenden Prozesses gemeinsam mit weiteren Briketts, ohne Zugabe weiterer Brennstoffe oder ohne Energiezugabe aufgeschmolzen werden. Dadurch wird eine autotherme Reaktion ermöglicht und eine präzise und effiziente Prozessführung in einem Reaktor begünstigt. Es kann aber auch sein, dass zusätzlich zu den Briketts eine zusätzliche Grobfraktion in den Reaktor zugegeben wird, wobei ein Heizwert dieses Materials so hoch ist, dass das darin enthaltene zumindest eine Metall in einer Verbrennung in dem Reaktor während eines laufenden Prozesses gemeinsam mit weiteren Briketts, ohne Zugabe weiterer Brennstoffe oder ohne Energiezugabe aufgeschmolzen werden. Bei einer Grobfraktion des Abfallmaterials kann es sich beispielsweise um eine Fraktion aus einer Shreddervorsortierung handeln, welche vergleichsweise hohe Anteile an Metallen, insbesondere an Buntmetallen, aufweist. Bei einer Grobfraktion kann es sich beispielsweise auch um Elektronikschrott, um Altmetall und/oder um eine Kunststofffraktion handeln.

Entsprechend einer vorteilhaften Weiterbildung kann vorgesehen sein, dass eine Zusammensetzung der Brikettmischung oder der Heizwert der Brikettmischung kontinuierlich an Prozessparameter des Reaktors angepasst wird. Prozessparameter sind beispielsweise die Temperatur in einer dem Reaktor nachgeschalteten Nachverbrennungsanlage, der Sauerstoffgehalt des Prozessgases in dem Reaktor oder in einer Nachverbrennungsanlage und/oder die Abgaszusammensetzung des Prozessgases in dem Reaktor oder in einer Nachverbrennungsanlage.

Die Aufgabe der Erfindung wird aber unabhängig davon auch durch ein Brikett aus einem Abfallmaterial gelöst. Das Abfallmaterial umfasst zumindest ein Metall und zumindest ein organisches Material. Das Brikett ist dabei bevorzugt in einem Verfahren nach einem der Ansprüche hergestellt. Dabei ist vorgesehen, dass das Brikett aus einer Brikettmischung enthaltend zumindest eine erste Fraktion des Abfallmaterials hergestellt ist, welche zumindest eine erste Fraktion einen Heizwert von 0 MJ/kg bis 30 MJ/kg aufweist, und dass das Brikett einen Heizwert von 5 MJ/kg bis 30 MJ/kg und einen maximalen Kupferanteil von 0,1 Gew.% bis 20 Gew.% aufweist. Um unnötige Wiederholungen zu vermeiden wird auf die vorhergehenden Beschreibungsteile und Vorteile verwiesen.

Das erfindungsgemäße Brikett hat den Vorteil, dass es einen definierten Heizwert und einen definierten Wertstoffgehalt, nämlich einem definierten Kupferanteil, aufweist. Indem die Zusammensetzung und Qualität der Briketts genau definiert und bekannt sind, kann das Brikett zusammen mit weiteren Briketts in einem etwaigen nachfolgenden Aufbereitungs- bzw. Schmelzprozess kontrolliert, prozesssicher und damit überaus wirtschaftlich eingesetzt werden. Insbesondere, wenn die erste Fraktion vorwiegend aus feinkörnigem Material zusammengesetzt ist und nachfolgend zur Aufbereitung, zur Verbrennung bzw. zum Aufschmelzen in einem Reaktor vorgesehen ist, kann eine Verarbeitung der ersten Fraktion zu Briketts vorteilhaft sein. Dies auch deshalb, weil Briketts einfach handhabbar sind und auch auf einfache Art und Weise dosierbar sind. Insbesondere können Briketts im Vergleich zu einer unbrikettierten ersten Fraktion staubreduziert in den Reaktor eingebracht werden und verbleiben infolgedessen auch im Prozessraum. Indem Heizwert und Wertstoffgehalt genau definiert sind, kann damit auch ein Anteil an schlackebildenden Bestandteilen genau eingestellt werden, was sich ebenso vorteilhaft auf einen etwaigen nachfolgenden Aufbereitungs- bzw. Schmelzprozess auswirken kann.

Ferner kann vorgesehen sein, dass die zumindest eine erste Fraktion eine Feinfraktion ist, oder eine Feinfraktion umfasst, welche Feinfraktion überwiegend Bestandteile mit einer maximalen Korngröße von weniger als 15 mm, bevorzugt von weniger als 10 mm aufweist.

Darüber hinaus kann vorgesehen sein, dass die Brikettmischung eine zweite Fraktion enthält, welche zweite Fraktion einen von der ersten Fraktion verschiedenen Heizwert aufweist.

Vorteilhaft ist auch eine Ausprägung, gemäß welcher vorgesehen sein kann, dass die zweite Fraktion eine Flusenfraktion ist, oder eine Flusenfraktion umfasst.

Gemäß einer Weiterbildung ist es möglich, dass ein Verhältnis von Feinfraktion zu Flusenfraktion maximal 0,1 bis 6, bevorzugt maximal 0,3 bis 5, besonders bevorzugt maximal 0,5 bis 3 beträgt. Ein mit diesen Mischverhältnissen hergestelltes Brikett weist ideale Eigenschaften zur Verbrennung bzw. zum Aufschmelzen in einem Reaktor, insbesondere in einem Schmelzreaktor, auf. Zu diesen Eigenschaften zählen unter anderem der Heizwert, der Gehalt an Wertstoffen, insbesondere der Gehalt an Metall bzw. an Kupfer und auch die Viskosität der Schmelze.

Ferner kann es zweckmäßig sein, wenn das Abfallmaterial zumindest ein mineralisches Material umfasst.

Darüber hinaus kann vorgesehen sein, dass das Brikett einen Heizwert von 8 MJ/kg bis 25 MJ/kg, bevorzugt von 11 MJ/kg bis 18 MJ/kg aufweist.

Des Weiteren kann vorgesehen sein, dass das Brikett einen maximalen Kupferanteil von 0,3 Gew.% bis 10 Gew.%, bevorzugt, von 0,5 Gew.% bis 3 Gew.% aufweist.

Gemäß einer besonderen Ausprägung ist es möglich, dass die Brikettmischung so zusammengesetzt ist, dass der Heizwert des darin enthaltenen Abfallmaterials so hoch ist, dass das darin enthaltene zumindest eine Metall in einer Verbrennung in einem Reaktor während eines laufenden Prozesses gemeinsam mit weiteren Briketts, ohne Zugabe weiterer Brennstoffe oder ohne Energiezugabe aufgeschmolzen werden.

Entsprechend einer vorteilhaften Weiterbildung kann vorgesehen sein, dass das Abfallmaterial zumindest ein weiteres Metall enthält, und dass ein Gesamtanteil an Metallen in der Brikettmischung maximal 35 Gew.% beträgt, bevorzugt maximal 25 Gew.% beträgt, besonders bevorzugt maximal 20 Gew.% beträgt. Alternativ kann es vorteilhaft sein, wenn ein Gesamtanteil an Metallen bestehend aus Kupfer und Metallen, welche gemäß dem Periodensystem der Elemente edler sind als Kupfer, maximal 25 Gew.% beträgt, besonders bevorzugt maximal 15 Gew.% beträgt, besonders bevorzugt maximal 10 Gew.% beträgt. Indem der Metallgehalt des Abfallmaterials im Vergleich zur metallurgischen Aufbereitung von primären und sekundären Rohstoffen gering ist, können Briketts mit einem hohen Heizwert bereitgestellt werden. Diese eignen sich besonders gut für eine kalorische Nutzung der Abwärme bei der Brikett-Verbrennung.

Insbesondere kann es vorteilhaft sein, wenn das Brikett bis zu einer Temperatur von 400°C thermostabil ist. In diesem Kontext ist mit thermostabil gemeint, dass das Brikett ausreichend lange stabil ist, um gelagert, transportiert und einem Reaktor zugeführt zu werden und dennoch nicht zu stabil ist, sodass das Brikett in dem Reaktor schnell zerfällt, verbrennt und aufschmilzt. Dies kann mit der angegebenen Temperatur gewährleistet werden.

Ferner kann vorgesehen sein, dass das Brikett bevorzugt zumindest im Wesentlichen zylindrisch ausgeformt ist, und dass eine Länge und ein Durchmesser des Briketts zumindest im Wesentlichen gleich groß sind, oder dass das Brikett bevorzugt zumindest im Wesentlichen kubisch ausgeformt ist, und dass eine Länge und eine Breite des Briketts zumindest im Wesentlichen gleich groß sind. Die Seitenlänge(n) des Briketts und/oder der Durchmesser des Briketts kann dabei von 10 mm bis 200 mm, bevorzugt von 20 mm bis 150 mm, besonders bevorzugt von 50 mm bis 120 mm betragen. Es kann auch vorteilhaft sein, wenn ein Verhältnis von Länge des Briketts zum Durchmesser des Briketts bzw. von Länge des Briketts zur Breite des Briketts maximal 0,3 bis 5, bevorzugt maximal 0,5 bis 3, besonders bevorzugt maximal 0,7 bis 2 beträgt.

Die Aufgabe der Erfindung wird unabhängig davon auch durch die Verwendung eines Briketts in einem Reaktor zum Aufschmelzen in zumindest eine flüssige Schlackephase und in zumindest eine flüssige metallhaltige Phase gelöst. Das Brikett handelt es sich dabei um ein Brikett nach einem der Ansprüche, und/oder das Brikett wurde in einem Verfahren nach einem der Ansprüche hergestellt. Um unnötige Wiederholungen zu vermeiden wird auf die vorhergehenden Beschreibungsteile und Vorteile verwiesen.

Die vorliegende Erfindung betrifft ein Verfahren zum Verarbeiten eines Abfallmaterials, das Metall und andere Stoffe enthält, insbesondere wenn es in Form von Flusen oder dergleichen vorliegt, beispielsweise Schredder-Leichtfraktionen, um das Metall zurückzugewinnen.

Vor diesem Hintergrund besteht eine Aufgabe der vorliegenden Erfindung darin, ein Verfahren zum Verarbeiten von Abfallmaterial, das Metall und andere Stoffe enthält, insbesondere wenn es in Form von Flusen oder dergleichen vorliegt, beispielsweise Schredder-Leichtfraktionen, bereitzustellen, das sich zur Rückgewinnung der Wertmetalle eignet.

Diese Aufgabe wird durch das Verfahren gelöst. Vorteilhafte Ausgestaltungen der Erfindung ergeben sich aus den Unteransprüchen.

Bei einem solchen Verfahren zum Verarbeiten von Metall und andere Stoffe enthaltendem Abfallmaterial zur Rückgewinnung des Metalls wird das Abfallmaterial zu Briketts verdichtet, anschließend in einen Schmelzreaktor eingebracht und in dem Schmelzreaktor zu mindestens zwei Phasen aufgeschmolzen.

Grundsätzlich ist die Verwendung von Schmelzreaktoren bekannt, in denen Abfallmaterial aufgeschmolzen werden kann, um verschiedene Phasen zu erzeugen, die einzelne Rohstoffe selektiv oder zu Rohstoffgruppen zusammengefasst beinhalten.

Um solche Schmelzreaktoren zu betreiben, ist es aber erforderlich, die Zusammensetzung des reagierenden Materials, inklusive Luft, möglichst genau zu bestimmen und einzustellen. Dies ist bei Schredder-Leichtfraktionen oder ähnlich strukturiertem Abfallmaterial mit einem gro-ßen Anteil organischer und mineralischer Inhaltsstoffe und einem kleinen Anteil metallischer Inhaltsstoffe bisher nicht möglich gewesen.

Das Verdichten zu Briketts ermöglicht zunächst ein kontinuierliches Chargieren in den Schmelzreaktor mit einer definierten Chargier-Rate. Außerdem wird durch das Verdichten zu Briketts ermöglicht, dass die Umsetzungsreaktionen des Abfallmaterials in dem Schmelzreaktor unter gut und sicher kontrollierbaren Bedingungen stattfinden können. Mit anderen Worten kann durch das Verdichten zu Briketts eine genaue Einstellung der in den Schmelzreaktor eingebrachten Materialien, insbesondere der für eine autotherme Reaktion erforderliche Materialmix, und damit des Reaktionsgemischs aus Abfallmaterial, Pyrolysegasen und Luft im Innern des Schmelzreaktors erfolgen. So kann auf effiziente und gut steuerbare Weise sichergestellt werden, dass im Schmelzreaktor das richtige Verhältnis der einzelnen Reaktionspartner zueinander, insbesondere das Verhältnis von Abfallmaterial zu Luft, herrscht. Durch das erfindungsgemäße Verfahren kann ein großer Teil der im Abfallmaterial enthaltenen Energie beim Aufschmelzen durch eine autothermische Schmelzreaktion genutzt werden, ohne auf die Möglichkeit der Wiedergewinnung des ebenfalls im Abfallmaterial enthaltenen Metalls verzichten zu müssen. Es kann also besonders energieeffizient wiedergewonnen werden. Ferner kann der gegebenenfalls vorhandene mineralische Anteil des Abfallmaterials, beispielsweise eine Mineralfraktion von Schredder-Leichtfraktionen, zusätzlich zur Rückgewinnung des Metalls, insbesondere von Nichteisen- und Edelmetallen, stofflich verwertet werden.

Die Briketts werden bevorzugt durch Verdichten des Abfallmaterials in einer als Kolbenverdichter ausgebildeten Presse erzeugt. Eine solche auch als Brikettierpresse bezeichnete Vorrichtung ist grundsätzlich bekannt. Dies ist im Vergleich zu anderen Möglichkeiten der Verdichtung des Abfallmaterials leicht und zuverlässig auch in großen Mengen und im kontinuierlichen Betrieb möglich.

Vorzugsweise weist dabei das Metall des Abfallmaterials Kupfer, Blei, Zinn, Zink, Nickel und Eisen sowie Edelmetalle auf. Für diese Metalle ist das hierin beschriebene Verfahren zuverlässig durchführbar, aber auch andere Metalle können in der hierin beschriebenen Weise für die Rückgewinnung aus dem Abfallmaterial zurückgewonnen werden.

Bevorzugt weisen die anderen Stoffe des Abfallmaterials organische und/oder mineralische Stoffe auf. Besonders bevorzugt umfasst das Abfallmaterial einen hohen Anteil organischer und mineralischer Inhaltsstoffe sowie einen niedrigen Anteil metallischer, insbesondere schwermetallischer Inhaltsstoffe. Diese Arten von Abfallmaterial lassen sich mit dem hierin beschriebenen Verfahren besonders zuverlässig und vorteilhaft verarbeiten.

Bevorzugt werden die Briketts unter Zugabe von Luft im Schmelzreaktor autotherm verwertet, so dass heiße Prozessgase erzeugt werden. Das Verdichten des Abfallmaterials zu Briketts ist hier besonders vorteilhaft, weil die Briketts das kontinuierliche und hinsichtlich seiner Rate genau bemessene Chargieren des Abfallmaterials in den Schmelzreaktor gegenüber Verfahren, die nicht das Abfallmaterial in anderer Form in den Schmelzreaktor einbringen, sehr erleichtern. Die Reaktionspartner können also so zusammengesetzt werden, dass eine weitere Energiezufuhr für die Reaktion nicht erforderlich ist.

Die heißen Prozessgase erzeugen dabei vorzugsweise zumindest teilweise in einem AbhitzeKessel Dampf. Der Dampf kann beispielsweise einer Dampfturbine zur Stromerzeugung oder dergleichen zugeführt werden. Die heißen Prozessgase, insbesondere ihre Wärmeenergie, können aber auch auf andere Weise genutzt werden, beispielsweise in einer Fernwärmeanlage.

Die heißen Prozessgase können ferner zumindest teilweise dazu beitragen, dass das Abfallmaterial in dem Schmelzreaktor aufgeschmolzen wird, indem sie ihre Wärmeenergie der Reaktion zuführen. Die heißen Prozessgase gewährleisten hierbei also das Auf-schmelzen der Metall- und Mineralstoffkomponenten im Abfallmaterial.

Mit Vorteil wird durch eine geeignete Steuerung der Atmosphäre im Schmelzreaktor eine Schlackenphase erzeugt, die arm an, bevorzugt im Wesentlichen frei von Wertmetall ist, insbesondere arm an, bevorzugt im Wesentlichen frei von, Kupfer, Blei, Zinn, Zink, Nickel, Eisen bzw. Edelmetallen. Die Schlackenphase wird als arm an Wertmetall angesehen, wenn sie 0,7 Gew.% oder weniger des Wertmetalls enthält. Die Schlackenphase wird als im Wesentlichen frei von Wertmetall angesehen, wenn sie 0,5 Gew.% oder weniger des Wertmetalls enthält. Daneben wird eine flüssige Metallphase, insbesondere eine flüssige Kupferphase, erzeugt, die mit weiteren Schwermetallen, insbesondere mit Blei, Zinn, Zink, Nickel sowie Edelmetallen angereichert ist. Die Schlackenphase und angereicherte flüssige Kupferphase erlauben eine relativ einfache selektive Rückgewinnung der einzelnen Inhaltsstoffe des Abfallmaterials. Die Atmosphäre im Schmelzreaktor lässt sich durch die Zuführung des Abfallmaterials in Form von Briketts besonders gut, insbesondere kontinuierlich steuern.

Bevorzugt wird das aufgeschmolzene Abfallmaterial in einen Separationsofen überführt, in dem eine Trennung, insbesondere eine gravimetrische Trennung, von Schlackenphase und Metallphase erfolgt.

Die Aufgabe wird unabhängig davon auch durch eine Industrieanlage gelöst, welche zur Durchführung eines Verfahrens zum Verarbeiten von Metall und andere Stoffe enthaltendem Abfallmaterial zur Rückgewinnung des Metalls ausgebildet ist. Die Industrieanlage umfasst eine vorzugsweise als Kolbenverdichter ausgebildete Presse zum Verdichten des Abfallmaterials zu Briketts und einen Schmelzreaktor zum Aufschmelzen der Briketts zu mindestens zwei Phasen.

Weitere Vorteile und Weiterbildungen der Erfindung ergeben sich aus der Gesamtheit der Ansprüche und der nachfolgenden Detailbeschreibung.

Zum besseren Verständnis der Erfindung wird diese anhand der nachfolgenden Figuren näher erläutert.

Es zeigen jeweils in stark vereinfachter, schematischer Darstellung:
- Fig. 1: ein grobschematisches Verfahrensfließbild,
- Fig. 2: eine vereinfachte schematische Darstellung eines Systems, in dem ein bevorzugtes Verfahren durchgeführt werden kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

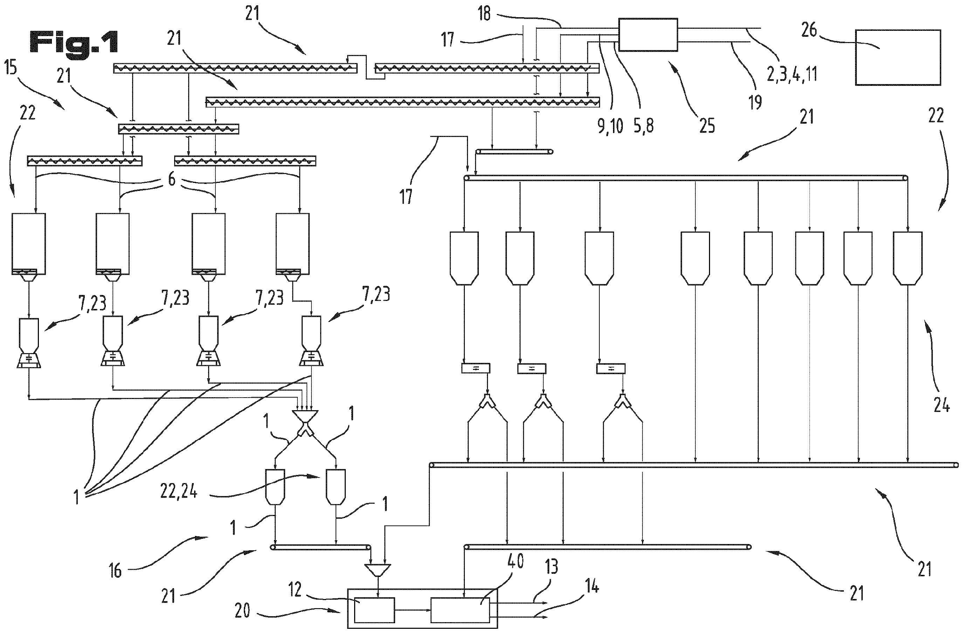

Die Fig. 1 zeigt ein grobschematisches Verfahrensfließbild der wichtigsten Verfahrensschritte und Stoffströme. Es versteht sich von selbst, dass nicht alle der gezeigten bzw. nachfolgend beschriebenen Anlagenteilen und Stoffströmen zwingend erforderlich sind. Zudem können neben den gezeigten bzw. nachfolgend beschriebenen Anlagenteilen und Stoffströmen noch weitere vorgesehen sein.

Im Wesentlichen umfasst das in der Fig. 1 gezeigte Verfahren bzw. das darin hergestellte Brikett 1 zwei Hauptanlagenbereiche - eine Brikettieranlage 15 zum Herstellen von Briketts mit einer oder mehreren Brikettiervorrichtungen 7 und eine Beschickungsanlage 16 zum Beschicken einer nachfolgenden Reaktoranlage 20. Zudem kann eine der Gesamtanlage zugehörige oder auch baulich eigenständige Abfallaufbereitungsanlage 25 zur Aufbereitung und Vorsortierung des Abfallmaterials 2 vorgesehen sein.

Die Brikettieranlage 15 und die Beschickungsanlage 16 sind in dem dargestellten Ausführungsbeispiel baulich in einer Gesamtanlage ausgeführt. Die Gesamtanlage wird im Wesentlichen über einen Hauptförderweg für Additive 17 und einen Hauptförderweg für das Abfallmaterial 2 gespeist. Die Brikettieranlage 15 und die Beschickungsanlage 16 dienen der Herstellung von Briketts 1 und optional auch der Lagerung, Mischung und Bereitstellung von stückigem Material, insbesondere einer Grobfraktion 18 aus dem Abfallmaterial 2 oder aus einem anderen bzw. weiteren Abfallmaterial 19. Bei einer Grobfraktion des Abfallmaterials kann es sich beispielsweise um eine Fraktion aus einer Shreddervorsortierung handeln, welche vergleichsweise hohe Anteile an Metallen, insbesondere an Buntmetallen, aufweist. Bei einer Grobfraktion eines weiteren Abfallmaterials 19 kann es sich beispielsweise um Elektronikschrott, um Altmetall und/oder um eine Kunststofffraktion handeln. Aus der Gesamtanlage kann dann gemäß dem gezeigten Beispiel ein Stoffstrom umfassend die Briketts 1 und gegebenenfalls weitere Komponenten, wie eine Grobfraktion 18, einer Reaktoranlage 20 mit einem Reaktor 12 kontinuierlich oder diskontinuierlich zugeführt werden. Es kann aber auch sein - ist jedoch figürlich nicht gezeigt -, dass die Herstellung der Briketts 1 in einer baulich oder auch räumlich gesonderten Brikettieranlage 15 erfolgt und dass die Briketts 1 in der nachfolgenden Beschickungsanlage 16 lediglich gelagert und aus dieser und bedarfsweise an die Reaktoranlage 20 gefördert werden. Eine Beschickungsanlage 16 kann auch als Bestandteil einer Reaktoranlage 20 ausgeführt sein.

Die Brikettieranlage 15 und Beschickungsanlage 16 umfassen eine Vielzahl an Fördermitteln 21 und Lagermitteln 22, beispielsweise Förderschnecken, Siebe, Rohrleitungen, Zwischenbunker, Silos, eine oder mehrere beispielsweise als Brikettierpresse 23 ausgebildete Brikettiervorrichtung 7, eine oder mehrere mit Wägezellen 24 ausgestattete Behälter, sowie Förderbänder. Mittels der Wägezellen 24 wird eine exakt dosierte Beschickung der Reaktoranlage 20 bzw. des Reaktors 12 mit den Briketts 1 ermöglicht. Zu diesem Zweck können auch die Lagersilos für die Grobfraktion 18 und auch für Additive 17 mit Wägezellen 24 ausgebildet sein.

In dem in der Fig. 1 gezeigten Verfahren ist zunächst ein Bereitstellen eines Abfallmaterials 2 vorgesehen, welches Abfallmaterial 2 zumindest ein Metall 3, insbesondere Kupfer, und zumindest ein organisches Material 4 umfasst. Das Abfallmaterial 2 kann zudem zumindest ein mineralisches Material 11 umfassen. Das Abfallmaterial 2 kann auch zumindest ein weiteres Metall enthalten, wobei ein Gesamtanteil an Metallen in der Brikettmischung 6 maximal 35 Gew.%, beträgt, bevorzugt maximal 25 Gew.%, beträgt, besonders bevorzugt maximal 20 Gew.%, beträgt. Alternativ kann es sein, dass ein Gesamtanteil an Metallen bestehend aus Kupfer und Metallen, welche Metalle gemäß dem Periodensystem der Elemente edler gelistet sind als Kupfer, maximal 25 Gew.% beträgt, bevorzugt maximal 15 Gew.% beträgt, besonders bevorzugt maximal 10 Gew.% beträgt.

Anschließend erfolgt ein ein- oder mehrstufiges mechanisches Aufbereiten des Abfallmaterials 2. Insbesondere diese beiden Schritte können in einer Abfallaufbereitungsanlage 25, beispielsweise in einer Shredderanlage, erfolgen. Eine Abfallaufbereitungsanlage 25 kann dabei auch baulich oder räumlich gesondert von der Brikettieranlage 15 und der Beschickungsanlage 16 ausgebildet sein. Die Abfallaufbereitungsanlage 25 kann auch der Aufbereitung eines weiteren Abfallmaterials 19 dienen. Neben der ersten Fraktion 5, kann in der Abfallaufbereitungsanlage 25 auch die zweite Fraktion 9 hergestellt werden. Natürlich wäre es auch denkbar, wenn die Abfallaufbereitungsanlage 25 Teil der Gesamtanlage ist. In der Abfallaufbereitungsanlage 25 und/oder in der Brikettieranlage 15 erfolgt weiters ein Trennen zumindest einer ersten Fraktion 5 von dem Abfallmaterial 2. Die in der Fig. 1 dargestellten Stoffströme sind dabei - wie eingangs erwähnt - lediglich schematisch und beispielshaft zu verstehen. Je nach Art des Abfallmaterials 2 und Auftrennung in der Abfallaufbereitungsanlage 25 kann es zweckmäßig sein, dass die Brikettieranlage 15 mit einen oder mehreren Sieben oder Förderschnecken ausgebildet ist, welche einer ausreichenden Auftrennung der Stoffströme dienlich sein können. Die in der Fig. 1 gezeigte Anordnung an Fördermitteln 21 bzw. an Förderschnecken ist dabei lediglich exemplarisch zu verstehen. Die tatsächliche Anordnung der Fördermittel 21 ist abhängig von Art und Beschaffenheit des zu transportierenden Materials und obliegt dem Können des Fachmannes. Es kann aber auch sein - ist jedoch figürlich nicht gezeigt -, dass nicht die Brikettieranlage 15, sondern die Abfallaufbereitungsanlage 25 mit einen oder mehreren Sieben oder Förderschnecken ausgebildet ist, welche einer ausreichenden Auftrennung der Stoffströme dienlich sein können.

Anschließend, also wie dargestellt im Anschluss an die Abfallaufbereitungsanlage 25 bzw. an die als Förderschnecken ausgebildeten Fördermittel 21, wird eine Brikettmischung 6 enthaltend die zumindest eine erste Fraktion 5 hergestellt bzw., wobei die erste Fraktion 5 einen Heizwert von 0 MJ/kg bis 30 MJ/kg aufweist. Dabei wird ein Heizwert der Brikettmischung 6 durch Variation zumindest der ersten Fraktion 5 hergestellt. Eine solche Variation kann beispielsweise mittels der Fördermittel 21 erfolgen. Die zumindest eine erste Fraktion 5 kann als eine Feinfraktion 8 bereitgestellt werden, welche Feinfraktion 8 überwiegend Bestandteile mit einer maximalen Korngröße von weniger als 15 mm, bevorzugt von weniger als 10 mm aufweist. Der Brikettmischung 6 kann zudem zumindest eine zweite Fraktion 9 beigemengt werden, welche einen von der ersten Fraktion 5 verschiedenen Heizwert aufweist. Die zweite Fraktion 9 kann dabei ebenfalls der Abfallaufbereitungsanlage 25 entstammen. Bei der zweiten Fraktion 9 kann es sich um eine Flusenfraktion 10 handeln. Ein Verhältnis von Feinfraktion 8 zu Flusenfraktion 10 beträgt maximal 0,1 bis 6, bevorzugt maximal 0,3 bis 5, besonders bevorzugt maximal 0,5 bis 3.

Sowohl die Fraktionen 5, 9 für die Brikettmischung 6, als auch die fertig gemischte Brikettmischung 6 werden in geeigneten Lagermitteln 22, beispielsweise in Silos, gelagert. Weiters wird die Brikettmischung 6 mittels der Fördermittel 21 zu den Brikettiervorrichtungen 7 bzw. zu den Brikettierpressen 23 gefördert. Die Brikettierpressen 23 können dabei beispielsweise als Kolbenverdichter bzw. als Strangpressen mit Exzenterantrieb ausgebildet sein. In der Fig. 1 sind dabei exemplarisch vier Brikettierpressen 23 gezeigt, wobei die tatsächliche Anzahl natürlich von der Anlagengröße bzw. Anlagenkapazität abhängt. Die Brikettierpressen 23 können parallel oder auch wechselweise betrieben werden. Es versteht sich von selbst, dass eine genaue Auslegung der Gesamtanlage im Können des Fachmannes steht. In weiterer Folge wird die Brikettmischung 6 in den Brikettiervorrichtungen 7 bzw. in den Brikettierpressen 23 zu Briketts 1 verpresst, sodass Briketts 1 mit einem Heizwert von 5 MJ/kg bis 30 MJ/kg und mit einem maximalen Kupferanteil von 0,1 Gew.% bis 20 Gew.% hergestellt werden. Insbesondere können die Briketts 1 einen Heizwert von 8 MJ/kg bis 25 MJ/kg, bevorzugt von 11 MJ/kg bis 18 MJ/kg, aufweisen. Zudem kann es sein, dass die Briketts 1 einen maximalen Kupferanteil von 0,3 Gew.% bis 10 Gew.%, bevorzugt von 0,5 Gew.% bis 3 Gew.%, aufweisen. Bevorzugt ist das Brikett 1 bis zu einer Temperatur von 400°C thermostabil. Das Brikett 1 kann zudem bevorzugt zumindest im Wesentlichen zylindrisch ausgeformt sein. Länge des Briketts 1 und Durchmesser des Briketts 1 sind dabei bevorzugt im Wesentlichen gleich groß. Das Brikett 1 kann aber auch bevorzugt zumindest im Wesentlichen kubisch ausgeformt sein, wobei Länge und Breite des Briketts 1 bevorzugt im Wesentlichen gleich groß sind. Die Seitenlänge(n) des Briketts 1 und/oder der Durchmesser des Briketts 1 kann dabei von 10 mm bis 200 mm, bevorzugt von 20 mm bis 150 mm, besonders bevorzugt von 50 mm bis 120 mm betragen. Es kann auch vorteilhaft sein, wenn ein Verhältnis von Länge des Briketts 1 zum Durchmesser des Briketts 1 bzw. von Länge des Briketts 1 zur Breite des Briketts 1 maximal 0,3 bis 5, bevorzugt maximal 0,5 bis 3, besonders bevorzugt maximal 0,7 bis 2 beträgt.

Die fertigen Briketts 1 können aus den Brikettierpressen 23 in eine oder mehrere mit Wägezellen 24 ausgebildete Lagermittel 22 bzw. Silos gefördert werden. Aus diesen Silos bzw. aus der Brikettiervorrichtung 7 werden die Briketts 1 kontinuierlich oder diskontinuierliche in einen Reaktor 12 einer Reaktoranlage 20 verbracht. Natürlich wäre es auch denkbar, dass die Briketts 1 direkt, also ohne Zwischenlagerung aus den Brikettiervorrichtungen 7 in den Reaktor 12 gefördert werden. Die Briketts 1 können nach dem Verpressen beheizt oder gekühlt werden. Ein solches Heizen oder Kühlen kann entweder in dem Anlagenbereich zwischen der Brikettiervorrichtung 7 und den Lagermitteln 22 erfolgen, oder in dem Förderweg zwischen den Lagermitteln 22 und dem Reaktor 12. Natürlich ist es auch denkbar, dass sämtliche Anlagenbereiche zwischen der Brikettiervorrichtung 7 und dem Reaktor 12 beheizt oder gekühlt werden. Zusätzlich zu den Briketts 1 können auch verschiedene Additive 17, sowie eine Grobfraktion 18 in den Reaktor 12 chargiert werden. In dem Reaktor 12 bzw. in einem dem Reaktor 12 nachgeschalteten Separationsofen 40 werden die Briketts 1, die Additive 17, sowie die Grobfraktion 18 in eine flüssige Schlackephase 13 und in eine flüssige metallhaltige Phase 14 aufgeschmolzen.

Die Brikettmischung 6 ist so zusammengesetzt, dass der Heizwert des darin enthaltenen Abfallmaterials 2 so hoch ist, dass das darin enthaltene zumindest eine Metall 3 in einer Verbrennung in dem Reaktor 12 während eines laufenden Prozesses gemeinsam mit weiteren Briketts 1, ohne Zugabe weiterer Brennstoffe oder ohne Energiezugabe aufgeschmolzen werden. Eine Zusammensetzung der Brikettmischung 1 oder der Heizwert der Brikettmischung 6 wird dabei kontinuierlich an Prozessparameter des Reaktors 12 angepasst. Bei den Prozessparametern kann es sich beispielsweise um die Temperatur eines Rauchgases in einer dem Reaktor 12 nachgeschalteten Nachverbrennungsanlage, um den Sauerstoffgehalt dieses Rauchgases, oder um die Zusammensetzung dieses Rauchgases handeln. Eine solche kontinuierliche Messung von Prozessparametern, sowie eine Steuerung des Prozesses auf Basis der Prozessparameter kann mit Hilfe einer Steuerung 26 erfolgen. Die Gesamtanlage kann mit einer zentralen Steuerung 26 ausgebildet sein, welche eine Überwachung, Messung, Steuerung und Regelung einzelner Anlagenbereiche ermöglicht. Es kann aber auch sein, dass die Hauptanlagenbereiche oder einzelne Anlagenbereiche über eine gesonderte bzw. separate Steuerung 26 verfügen.

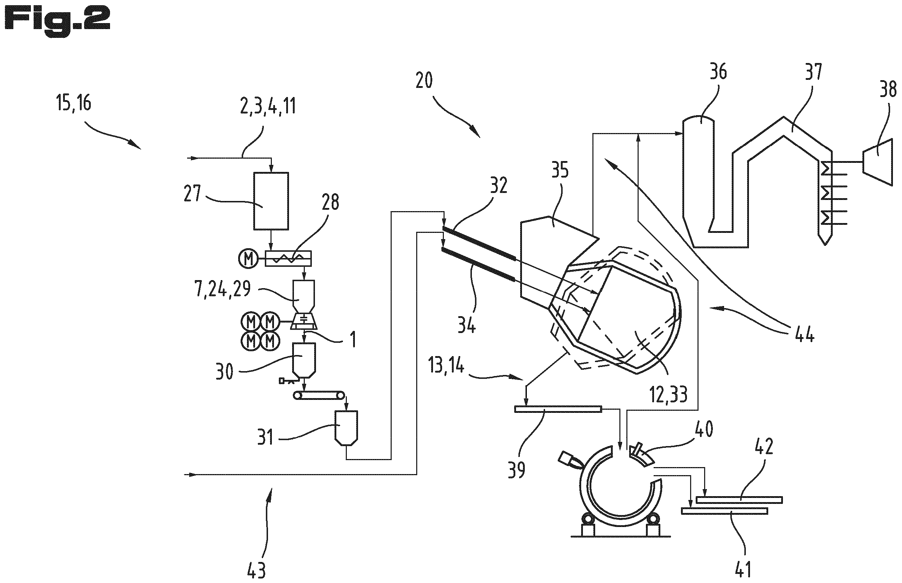

Fig. 2 zeigt eine weitere vereinfachte schematische Darstellung eines Systems, in dem ein bevorzugtes Verfahren durchgeführt werden kann. Dabei ist in einem Gesamtprozess bzw. in einer Gesamtanlage gezeigt, wie verfahrensgemäß hergestellte Briketts 1 in einer Reaktoranlage 20 verwendet bzw. aufbereitet werden.

Schredder-Leichtfraktionen als vorliegendes Beispiel für ein Metall 3 und andere Stoffe enthaltendes Abfallmaterial 2, dessen Metallanteil weitgehend zurückgewonnen werden soll, werden zunächst in einen Vorratsbunker 27 eingebracht, um von dort aus weiterverarbeitet zu werden. Von dem Vorratsbunker 27 wird das Abfallmaterial 2 über Förderschnecken 28 und dergleichen einer als Kolbenverdichter 29 ausgebildeten Brikettierpresse 23 zugeführt, wo das Abfallmaterial 2 zu Briketts 1 verdichtet wird. In den Schredder-Leichtfraktionen können als Metall 3 insbesondere Kupfer, Blei, Zinn, Zink, Nickel und/oder Edelmetalle enthalten sein.

In einer konkreten Anlage können beispielsweise vier als Kolbenverdichter 29 ausgebildete Brikettierpressen 23 etwa 10 Tonnen Schredder-Leichtfraktionen pro Stunde verdichten und brikettieren.

Die Briketts 1 werden anschließend über eine Waage 30 in einen Dosierbunker 31 transportiert, um von diesem über eine Chargierlanze 32 in einen Schmelzreaktor 33 eingebracht zu werden. Zusätzlich zu den Briketts 1 wird in den Schmelzreaktor 33 auch Luft 43 eingebracht, um ein reaktionsfähiges Gemisch im Innern des Schmelzreaktors 33 zu erzeugen. Das Einbringen der Briketts 1 erfolgt chargenweise, d.h. in Schüben.

Bevor die Briketts 1 in den Schmelzreaktor 33 eingebracht werden, wird dieser aufgeheizt, beispielsweise auf 1200°C bis 1250°C. Durch das Verdichten des Abfallmaterials 2 zu Briketts 1 kann sehr exakt eingestellt werden, wieviel organisches Material 4 in das Innere des Schmelzreaktors 33 eingebracht wird. Hierfür hat sich beispielsweise ein Anteil von 35% bis 50% organisches Material 4 der eingebrachten Masse bewährt, um unter Beteiligung der durch eine eigene Druckluftlanze 34 zugeführten Luft und Pyrolysegasen autotherm zu reagieren.

Die autotherme Reaktion kann durch die Steuerung der Menge zugeführter Luft und Pyrolysegase stabilisiert werden, wobei es hierfür von wesentlicher Bedeutung ist, zu wissen, wieviel organisches, an der Reaktion beteiligtes Material 4 im Schmelzreaktor 33 vorhanden ist. Es wird nur so viel Luft zugeführt, dass die Reaktion im Schmelzreaktor 33 stattfindet, d.h. das organische Material 4 und die Pyrolysegase brennen. Die Zufuhr von Luft wird aber begrenzt, um nicht alle Pyrolysegase direkt verbrennen zu lassen, um den Schmelzreaktor 33 nicht zu überhitzen. Diese Reaktion kann im Schmelzreaktor 33 beispielsweise über 5 bis 5,5 Stunden ohne Fremdbefeuerung ablaufen und im Innern des Schmelzreaktors 33 bildet sich auf diese Weise ein Bad aus flüssiger Schlacke 13 und flüssigem Metall 14.

Bei der autothermen Reaktion entstehen heiße Prozessgase 44, die über eine Absaughaube 35 abgesaugt und durch eine Nachbrennkammer 36 einem Kessel 37 zugeführt werden, in dem auf übliche Weise Dampf erzeugt werden kann, der über eine Turbine 38 zur Erzeugung elektrischer Energie verwendet werden kann. Der Dampf kann alternativ und zusätzlich in Nahwärme und Fernwärmenetzen eingesetzt werden.

Nachdem die Reaktion im Schmelzreaktor 33 möglichst vollständig abgelaufen ist, kann der Schmelzreaktor 33 ausgegossen und sein flüssiger Inhalt über eine Transportstrecke 39 weitergefördert werden. Vorzugsweise wird das Bad aus flüssiger Schlacke 13 und flüssigem Metall 14 somit einem Separationsofen 40 zugeführt, der beispielsweise als Trommelofen realisiert sein und in dem eine Temperatur von beispielsweise 1200°C bis 1250°C herrschen kann. Der Separationsofen 40 wird anders als der Schmelzreaktor 33 fremdbefeuert, um seine Temperatur zu erreichen und zu halten, da in ihm keine Reaktion mehr stattfinden soll. Nachdem der Schmelzreaktor 33 geleert wurde, kann er mit einer weiteren Charge Abfallmaterial 2 befüllt werden.

In dem Separationsofen 40 kann über einen Zeitraum von beispielsweise ebenfalls 5 bis 5,5 Stunden eine Trennung der Schlackephase 13 von der Metallphase 14 erfolgen. Hierfür bietet sich die gravimetrische Trennung an, da die Schlackephase 13 eine Dichte von etwa 3 t/m³ bis 3,5 t/m³ hat, während die Metallphase 14 eine Dichte von etwa 8 t/m³ hat, wobei diese Werte nur beispielhaft sind und sich natürlich von Material zu Material ändern. Bei unterschiedlichen Dichten der zwei oder mehr Phasen werden sich diese im Separationsofen 40 in Schichten voneinander abgrenzen.

Im Separationsofen 40 kann über einen Zeitraum von beispielsweise 3 Stunden bis 4 Stunden ein Einstellen der Schlacke stattfinden und diese dann über einen Zeitraum von beispielsweise 2 Stunden bis 3 Stunden granuliert und aus dem Separationsofen 40 über eine Schlacke-Ausgabestrecke 41 entnommen werden.

Aus dem Separationsofen 40 kann vorzugsweise danach das Metall 3 über eine Metall-Ausgabestrecke 42 entnommen und damit rückgewonnen werden. Das Metall 3 kann beispielsweise als flüssige Metallphase 14, beispielsweise Kupferphase, vorliegen, die mit weiteren Metallen oder Schwermetallen wie Blei, Zinn, Zink, Nickel und/oder Edelmetallen angereichert sein kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Brikett | 32 | Chargierlanze |
| 2 | Abfallmaterial | 33 | Schmelzreaktor |
| 3 | Metall | 34 | Druckluftlanze |
| 4 | organisches Material | 35 | Absaughaube |
| 5 | erste Fraktion | 36 | Nachbrennkammer |
| 6 | Brikettmischung | 37 | Kessel |
| 7 | Brikettiervorrichtung | 38 | Turbine |
| 8 | Feinfraktion | 39 | Transportstrecke |
| 9 | zweite Fraktion | 40 | Separationsofen |
| 10 | Flusenfraktion | 41 | Schlacke-Ausgabestrecke |
| 11 | mineralisches Material | 42 | Metall-Ausgabestrecke |
| 12 | Reaktor | 43 | Luft |
| 13 | Schlackephase | 44 | Prozessgas |
| 14 | metallhaltige Phase | | |
| 15 | Brikettieranlage | | |
| 16 | Beschickungsanlage | | |
| 17 | Additiv | | |
| 18 | Grobfraktion | | |
| 19 | weiteres Abfallmaterial | | |
| 20 | Reaktoranlage | | |
| 21 | Fördermittel | | |
| 22 | Lagermittel | | |
| 23 | Brikettierpresse | | |
| 24 | Wägezelle | | |
| 25 | Abfallaufbereitungsanlage | | |
| 26 | Steuerung | | |
| 27 | Vorratsbunker | | |
| 28 | Förderschnecke | | |
| 29 | Kolbenverdichter | | |
| 30 | Waage | | |
| 31 | Dosierbunker | | |

## Patentansprüche

1. Verfahren zur Herstellung von Briketts (1) aus einem Abfallmaterial (2) umfassend die Schritte:
- Bereitstellen eines Abfallmaterials (2), welches Abfallmaterial (2) zumindest ein Metall (3) und zumindest ein organisches Material (4) umfasst,
- ein- oder mehrstufiges mechanisches Aufbereiten des Abfallmaterials (2) und Trennen zumindest einer ersten Fraktion (5) von dem Abfallmaterial (2),
- Herstellen einer Brikettmischung (6) enthaltend die zumindest eine erste Fraktion (5), wobei die zumindest eine erste Fraktion (5) einen Heizwert von 0 MJ/kg bis 30 MJ/kg aufweist,
- Einstellung eines Heizwertes der Brikettmischung (6) durch Variation zumindest der ersten Fraktion (5),
- Einbringen der Brikettmischung (6) in eine Brikettiervorrichtung (7) und Verpressen der Brikettmischung (6) zu Briketts (1), sodass Briketts (1) mit einem Heizwert von 5 MJ/kg bis 30 MJ/kg und mit einem maximalen Kupferanteil von 0,1 Gew.% bis 20 Gew.% hergestellt werden.

2. Verfahren nach Anspruch 1, **dadurch gekennzeichnet, dass** die zumindest eine erste Fraktion (5) als Feinfraktion (8), oder umfassend eine Feinfraktion (8) bereitgestellt wird, welche Feinfraktion (8) überwiegend Bestandteile mit einer maximalen Korngröße von weniger als 15 mm, bevorzugt von weniger als 10 mm, aufweist.

3. Verfahren nach einem der vorhergehenden Ansprüche, **dadurch gekennzeichnet, dass** der Brikettmischung (6) zumindest eine zweite Fraktion (9) beigemengt wird, welche zweite Fraktion (9) einen von der ersten Fraktion (5) verschiedenen Heizwert aufweist.

4. Verfahren nach Anspruch 3, **dadurch gekennzeichnet, dass** die zweite Fraktion (9) eine Flusenfraktion (10) ist, oder eine Flusenfraktion (10) umfasst.

5. Verfahren nach einem der vorhergehenden Ansprüche, **dadurch gekennzeichnet, dass** das Abfallmaterial (2) zumindest ein mineralisches Material (11) umfasst.

6. Verfahren nach einem der vorhergehenden Ansprüche, **dadurch gekennzeichnet, dass** die Briketts (1) mit einem Heizwert von 8 MJ/kg bis 25 MJ/kg, bevorzugt von 11 MJ/kg bis 18 MJ/kg, hergestellt werden.

7. Verfahren nach einem der vorhergehenden Ansprüche, **dadurch gekennzeichnet, dass** die Briketts (1) mit einem maximalen Kupferanteil von 0,3 Gew.% bis 10 Gew.%, bevorzugt von 0,5 Gew.% bis 3 Gew.% hergestellt werden.

8. Verfahren nach einem der vorhergehenden Ansprüche, **dadurch gekennzeichnet, dass** die Briketts (1) nach dem Verpressen beheizt oder gekühlt werden.

9. Verfahren nach einem der vorhergehenden Ansprüche, **dadurch gekennzeichnet, dass** die Briketts (1) aus der Brikettiervorrichtung (7) kontinuierlich oder diskontinuierliche in einen Reaktor (12) verbracht werden.

10. Verfahren nach Anspruch 9, **dadurch gekennzeichnet, dass** die Brikettmischung (6) so zusammengesetzt ist, dass der Heizwert des darin enthaltenen Abfallmaterials (2) so hoch ist, dass das darin enthaltene zumindest eine Metall (3) in einer Verbrennung in dem Reaktor (12) während eines laufenden Prozesses gemeinsam mit weiteren Briketts (1), ohne Zugabe weiterer Brennstoffe oder ohne Energiezugabe aufgeschmolzen werden.

11. Verfahren nach Anspruch 9 oder 10, **dadurch gekennzeichnet, dass** eine Zusammensetzung der Brikettmischung (1) oder der Heizwert der Brikettmischung (6) kontinuierlich an Prozessparameter des Reaktors (12) angepasst wird.

12. Brikett (1) aus einem Abfallmaterial (2), welches Abfallmaterial (2) zumindest ein Metall (3) und zumindest ein organisches Material (4) umfasst, und welches Brikett (1) bevorzugt in einem Verfahren nach einem der Ansprüche 1 bis 11 hergestellt ist,
**dadurch gekennzeichnet, dass**
das Brikett (1) aus einer Brikettmischung (6) enthaltend zumindest eine erste Fraktion (5) des Abfallmaterials (2) hergestellt ist, welche zumindest eine erste Fraktion (5) einen Heizwert von 0 MJ/kg bis 30 MJ/kg aufweist, und
dass das Brikett (1) einen Heizwert von 5 MJ/kg bis 30 MJ/kg und einen maximalen Kupferanteil von 0,1 Gew.% bis 20 Gew.% aufweist.

13. Brikett (1) nach Anspruch 12, **dadurch gekennzeichnet, dass** die zumindest eine erste Fraktion (5) eine Feinfraktion (8) ist, oder eine Feinfraktion (8) umfasst, welche Feinfraktion (8) überwiegend Bestandteile mit einer maximalen Korngröße von weniger als 15 mm, bevorzugt von weniger als 10 mm, aufweist.

14. Brikett (1) nach Anspruch 13, **dadurch gekennzeichnet, dass** die Brikettmischung (6) eine zweite Fraktion (9) enthält, welche zweite Fraktion (9) einen von der ersten Fraktion (5) verschiedenen Heizwert aufweist.

15. Brikett (1) nach Anspruch 14, **dadurch gekennzeichnet, dass** die zweite Fraktion (9) eine Flusenfraktion (10) ist, oder eine Flusenfraktion (10) umfasst.

16. Brikett (1) nach Anspruch 15, **dadurch gekennzeichnet, dass** ein Verhältnis von Feinfraktion (8) zu Flusenfraktion (10) maximal 0,1 bis 6, bevorzugt maximal 0,3 bis 5, besonders bevorzugt maximal 0,5 bis 3, beträgt.

17. Brikett (1) nach einem der Ansprüche 12 bis 16, **dadurch gekennzeichnet, dass** das Abfallmaterial (2) zumindest ein mineralisches Material (11) umfasst.

18. Brikett (1) nach einem der Ansprüche 12 bis 17, **dadurch gekennzeichnet, dass** das Brikett (1) einen Heizwert von 8 MJ/kg bis 25 MJ/kg, bevorzugt von 11 MJ/kg bis 18 MJ/kg, aufweist.

19. Brikett (1) nach einem der Ansprüche 12 bis 18, **dadurch gekennzeichnet, dass** das Brikett (1) einen maximalen Kupferanteil von 0,3 Gew.% bis 10 Gew.%, bevorzugt von 0,5 Gew.% bis 3 Gew.%, aufweist.

20. Brikett (1) nach einem der Ansprüche 12 bis 19, **dadurch gekennzeichnet, dass** die Brikettmischung (6) so zusammengesetzt ist, dass der Heizwert des darin enthaltenen Abfallmaterials (2) so hoch ist, dass das darin enthaltene zumindest eine Metall (3) in einer Verbrennung in einem Reaktor (12) während eines laufenden Prozesses gemeinsam mit weiteren Briketts (1), ohne Zugabe weiterer Brennstoffe oder ohne Energiezugabe aufgeschmolzen werden.

21. Brikett (1) nach einem der Ansprüche 12 bis 20, **dadurch gekennzeichnet, dass** das Abfallmaterial (2) zumindest ein weiteres Metall enthält, und dass ein Gesamtanteil an Metallen in der Brikettmischung (6) maximal 35 Gew.%, beträgt, bevorzugt maximal 25 Gew.%, beträgt, besonders bevorzugt maximal 20 Gew.%, beträgt, oder dass ein Gesamtanteil an Metallen bestehend aus Kupfer und Metallen, welche gemäß dem Periodensystem der Elemente edler sind als Kupfer, maximal 25 Gew.% beträgt, besonders bevorzugt maximal 15 Gew.% beträgt, besonders bevorzugt maximal 10 Gew.% beträgt.

22. Brikett (1) nach einem der Ansprüche 12 bis 21, **dadurch gekennzeichnet, dass** es bis zu einer Temperatur von 400°C thermostabil ist.

23. Brikett (1) nach einem der Ansprüche 12 bis 22, **dadurch gekennzeichnet, dass** es bevorzugt zumindest im Wesentlichen zylindrisch ausgeformt ist, und dass eine Länge und ein Durchmesser des Briketts (1) zumindest im Wesentlichen gleich groß sind, oder dass das Brikett (1) bevorzugt im Wesentlichen kubisch ausgeformt ist, und dass eine Länge und eine Breite des Briketts (1) zumindest im Wesentlichen gleich groß sind.

24. Verwendung eines Briketts (1), welches in einem Verfahren nach einem der Ansprüche 1 bis 11 hergestellt wurde, und/oder eines Briketts (1) nach einem der Ansprüche 12 bis 23 in einem Reaktor (12) zum Aufschmelzen in zumindest eine flüssige Schlackephase (13) und in zumindest eine flüssige metallhaltige Phase (14).
